# EUROPÄISCHE PATENTSCHRIFT

(11) **EP 3 116 766 B1**
(45) Veröffentlichungstag und Bekanntmachung des Hinweises auf die Patenterteilung: **10.10.2018**
(21) Anmeldenummer: 15709846.8
(22) Anmeldetag: 13.03.2015
(51) Int. Cl.: B62D 35/00

(54) **BAUGRUPPE FÜR EIN KRAFTFAHRZEUG UND VERFAHREN ZUM VERBINDEN EINES KAROSSERIETEILS MIT EINEM SPOILER**
ASSEMBLY FOR A MOTOR VEHICLE AND METHOD FOR CONNECTING A BODY PART TO A SPOILER
GROUPE MODULAIRE POUR UN VÉHICULE AUTOMOBILE ET PROCÉDÉ SERVANT À RELIER UNE PARTIE DE CARROSSERIE À UN SPOILER

(30) Priorität: 14.03.2014 DE 102014103541
(43) Veröffentlichungstag der Anmeldung: 18.01.2017
(73) Patentinhaber: REHAU AG + Co, 95111 Rehau (DE)
(72) Erfinder: VOGEL, Matthias, 95233 Helmbrechts (DE); PREISSINGER, Christian, 95615 Marktredwitz (DE)
(86) Internationale Anmeldenummer: PCT/EP2015/000562
(87) Internationale Veröffentlichungsnummer: WO 2015/135661

(56) Entgegenhaltungen:
- EP-A1- 1 911 664
- EP-B1- 2 464 542
- WO-A1-2012/073632
- JP-A- H0 834 372
- JP-A- S6 418 785
- JP-A- H02 249 774
- US-B1- 6 672 651

## Beschreibung

### Hintergrund der Erfindung

Die vorliegende Erfindung betrifft eine Baugruppe für ein Kraftfahrzeug, mit einer Heckklappe und einem Heckspoiler nach Anspruch 1 und Verfahren zum Verbinden einer Heckklappe mit einem Heckspoiler nach Anspruch 4.

Bei den bekannten Baugruppen der oben genannten Art ist das Montieren des Spoilers an dem Karosserieteil des Kraftfahrzeugs infolge der Ausbildung der Baugruppen mit einem hohen Aufwand verbunden. Eine Baugruppe der oben genannten Art ist z.B. aus der EP 2 464 542 B1 bekannt.

### Zugrundeliegende Aufgabe

Vor dem obigen Hintergrund liegt der Erfindung die Aufgabe zugrunde, eine Baugruppe und ein Verfahren zum Verbinden eines Karosserieteils mit einem Spoilers anzugeben, mit welchen der Montageaufwand für die Montage des Spoilers an dem Karosserieteil reduziert werden kann.

### Erfindungsgemäße Lösung

Diese Aufgabe wird erfindungsgemäß mit einer Baugruppe für ein Kraftfahrzeug mit den Merkmalen des Anspruchs 1 und mit einem Verfahren mit den Merkmalen des Anspruchs 4 gelöst.

Die Baugruppe zeichnet sich dadurch aus, dass die lösbare Verbindungseinrichtung zum Betätigen derselben von außerhalb des Kraftfahrzeugs zugänglich ist bzw. dass die lösbare Verbindungseinrichtung von außerhalb des Kraftfahrzeugs betätigbar ist. Im Unterschied zu bekannten Baugruppen, bei denen das Verbinden des Spoilers mit dem Karosserieteil z.B. von einem Monteur nur von innerhalb des Kraftfahrzeugs vorgenommen werden kann, kann durch Vorsehen einer lösbaren Verbindungseinrichtung, die zum Betätigen derselben von außerhalb des Kraftfahrzeugs zugänglich ist, der Montageaufwand reduziert werden, da die bei der Montage anfallenden Verbindungsarbeiten zur Gänze oder zumindest teilweise bequem von außerhalb des Kraftfahrzeugs vorgenommen werden können. Auf ein infolge enger Platzverhältnisse schwieriges Verbinden vom Inneren des Kraftfahrzeugs her kann vorteilhaft teilweise oder zur Gänze verzichtet werden. Insbesondere können auch Ungenauigkeiten beim Verbinden infolge der engen Platzverhältnisse im Inneren des Kraftfahrzeugs - die ein genaues Arbeiten beim Verbinden erschweren - vorteilhaft vermieden werden. Nach wie vor einen Teil der Verbindungsarbeiten zusätzlich von innerhalb des Kraftfahrzeugs vorzunehmen kann jedoch je nach Ausführung der Baugruppe erforderlich bzw. vorteilhaft sein.

Die Verbindungseinrichtung ist eine lösbare Schraubverbindung oder eine lösbare Schnappverbindung oder eine lösbare Nietverbindung oder eine lösbare Klemmverbindung oder eine lösbare Rastverbindung. Insbesondere mittels einer lösbaren Schraubverbindung kann eine feste und betriebssichere Verbindung zwischen dem Spoiler und dem Karosserieteil geschaffen werden. Insbesondere kann eine lösbare Schraubverbindung auf einfache und praktische Weise betätigt werden, wobei das Betätigen der Schraubverbindung in bekannter Weise durch Anziehen bzw. Lösen der Schraubverbindung erfolgen kann. Lösbare Schnappverbindungen, lösbare Klemmverbindungen und lösbare Rastverbindungen zeichnen sich neben einer hohen Betriebssicherheit insbesondere durch eine einfache vornehmbare Lösbarkeit aus. Insbesondere durch eine Nietverbindung kann eine sehr betriebssichere Verbindung geschaffen werden.

Bei dem Spoiler handelt es sich um einen Heckspoiler bzw. der Spoiler kann z.B. als Heckspoiler ausgebildet sein. Ferner ist das Karosserieteil eine Heckklappe bzw. als Heckklappe ausgebildet. Insbesondere bei einer Baugruppe für ein Kraftfahrzeug, die eine Heckklappe und einen Heckspoiler umfasst, kann durch Vorsehen der von außerhalb des Kraftfahrzeugs zugänglichen bzw. der von außerhalb des Kraftfahrzeugs betätigbaren und lösbaren Verbindungseinrichtung - über welche der Heckspoiler mit der Heckklappe verbunden bzw. an dieser befestigt ist - der Montageaufwand für die Montage des Spoilers an dem Karosserieteil wesentlich reduziert werden. Insbesondere bei bekannten Heckspoiler/Heckklappe-Baugruppen ist das Verbinden des Heckspoilers mit der Heckklappe von innerhalb des Kraftfahrzeugs infolge der engen Platzverhältnisse im Heckbereich des Kraftfahrzeugs sehr schwierig bzw. aufwendig, so dass durch Vorsehen der von außerhalb zugänglichen bzw. betätigbaren Verbindungseinrichtung der Montageaufwand insgesamt wesentlich reduziert werden kann.

Wenn der Spoiler als Heckspoiler ausgebildet ist und wenn das Karosserieteil eine Heckklappe ist, kann bei einer praktischen Ausführungsform der Heckspoiler einen ersten und einen zweiten Endbereich aufweisen, wobei der erste Endbereich durch wenigstens eine erste lösbare Verbindungseinrichtung, die von außerhalb des Kraftfahrzeugs zugänglich ist, mit der Heckklappe verbunden ist, wobei der zweite Endbereich durch wenigstens eine zweite lösbare Verbindungseinrichtung, die von außerhalb des Kraftfahrzeugs zugänglich ist, mit der Heckklappe verbunden ist, und wobei wenigstens ein Zwischenbereich des Heckspoilers zwischen den beiden Endbereichen des Heckspoilers - also zwischen dem ersten und dem zweiten Endbereich des Heckspoilers - durch wenigstens eine von innerhalb des Kraftfahrzeugs zugängliche lösbare Verbindungsvorrichtung mit der Heckklappe verbunden ist.

Bei dieser praktischen Ausführungsform werden ferner vorteilhaft erste und zweite von außen zugängliche bzw. von außen betätigbare und lösbare Verbindungseinrichtungen an den beiden Endbereichen mit wenigstens einer von innerhalb des Kraftfahrzeugs zugänglichen und lösbaren Verbindungsvorrichtung am Zwischenbereich kombiniert. Insbesondere an den Endbereichen ist eine Verbindung des Heckspoilers mit der Heckklappe durch eine von innerhalb des Kraftahrzeugs zugängliche bzw. betätigbare Verbindungsvorrichtung - die sonst je nach Ausführung der Baugruppe erforderlich bzw. vorteilhaft sein kann - infolge des kleinen Bauraums an den Endbereichen bzw. der nur eingeschränkten Zugänglichkeit gar nicht oder nur unter Hinnahme von Positionierungsfehlern des jeweiligen Heckspoilers möglich. Insofern kann durch Vorsehen der von außerhalb des Kraftfahrzeugs betätigbaren ersten und zweiten Verbindungseinrichtungen eine Verbindung des Heckspoilers mit der Heckklappe auch an den Endbereichen des Heckspoilers geschaffen werden, welche keine Positionierungsfehler aufweist. Durch das zusätzliche Vorsehen der wenigstens einen lösbaren Verbindungsvorrichtung an dem Zwischenbereich kann die Verbindung zwischen der Hecklappe und dem Heckspoiler ferner vorteilhaft stabilisiert bzw. verstärkt werden. Insbesondere kann durch Vorsehen der Verbindungen an den Endbereichen in Kombination mit der Verbindung am Zwischenbereich eine bessere Verteilung von Verbindungspunkten bzw. Befestigungspunkten geschaffen werden. Insbesondere kann je nach Lage der Verbindungspunkte bzw. Verbindungsbereiche die Widerstandfähigkeit des Heckspoilers gegen Missbrauch, z.B. beim Waschanlagentest, erhöht werden.

Besonders bevorzugt ist eine die erste Verbindungseinrichtung mit der zweiten Verbindungseinrichtung verbindende Verbindungsgerade von der Verbindungsvorrichtung, die von innerhalb des Kraftfahrzeugs zugänglich ist, beabstandet. Durch dieses Beabstanden der Verbindungseinrichtungen für die Endbereiche von der Verbindungsvorrichtung für den Zwischenbereich kann eine sehr feste Verbindung zwischen dem Heckspoiler und der Heckklappe geschaffen werden, die infolge der Beabstandung der Verbindungsgerade von der Verbindungsvorrichtung am Zwischenbereich sehr widerstandsfähig gegen ein auf die Verbindung einwirkendes Drehmoment ist, welches insbesondere bei Diebstahlversuchen aufgebracht werden könnte.

Bei der Verbindungsgeraden, welche die erste mit der zweiten Verbindungseinrichtung verbindet, handelt es sich um eine Gerade bzw. gedachte Gerade, welche einen beliebigen Punkt bzw. Bereich der ersten Verbindungseinrichtung mit einem beliebigen Punkt bzw. Bereich der zweiten Verbindungseinrichtung verbindet.

Bei einer weiteren praktischen Ausführungsform ist ein Verkleidungselement zum Bedecken der Verbindungseinrichtung bzw. wenigstens ein Verkleidungselement zum Bedecken der Verbindungseinrichtung vorgesehen. Insbesondere können zwei jeweils in Form eines aerodynamischen Abweisers ausgebildete Verkleidungselemente vorgesehen sein, von denen eines an einem und das andere an dem andern der beiden Endbereiche bzw. Enden eines Heckspoilers zum Bedecken der dort vorgesehenen Verbindungseinrichtungen vorgesehen sind. Durch die Ausbildung in Form eines aerodynamischen Abweisers kann das aerodynamische Verhalten des gesamten Heckspoilers verbessert werden. Im Rahmen der Erfindung liegt es, dass ein Verkleidungselement, insbesondere also ein aerodynamischer Abweiser, aus mehreren Teilen besteht.

Das Verfahren zum Verbinden eines Karosserieteils mit einem Spoiler, wobei der Spoiler mit dem Karosserieteil durch Betätigen wenigstens einer lösbaren Verbindungseinrichtung verbunden wird, zeichnet sich dadurch aus, dass die Verbindungseinrichtung von außerhalb des Kraftfahrzeugs betätigt wird. Durch Betätigen der Verbindungseinrichtung von außerhalb des Kraftfahrzeugs, die hierfür also von außerhalb des Kraftfahrzeugs zugänglich bzw. betätigbar ist, kann aus den bereits oben im Zusammenhang mit der Baugruppe dargelegten Gründen der Montageaufwand reduziert werden.

Bei einer praktischen Ausführungsform des Verfahrens wird der Spoiler zusätzlich durch Betätigen wenigstens einer von innerhalb des Kraftfahrzeugs zugänglichen und lösbaren Verbindungsvorrichtung von innerhalb des Kraftfahrzeugs mit dem Karosserieteil verbunden. Je nach Ausführung des Spoilers und/oder des Karosserieteils kann es erforderlich bzw. vorteilhaft sein, eine zusätzliche lösbare Verbindungsvorrichtung vorzusehen, die von innerhalb des Kraftfahrzeugs zugänglich bzw. betätigbar ist und welche die Verbindung zwischen der Hecklappe und dem Heckspoiler ferner vorteilhaft stabilisiert bzw. verstärkt.

Bei einer weiteren praktischen Ausführungsform des Verfahrens wird der Spoiler als Heckspoiler mit einem ersten und einem zweiten Endbereich und das Karosserieteil als Heckklappe ausgebildet, wobei der erste Endbereich durch Betätigen wenigstens einer ersten lösbaren Verbindungseinrichtung von außerhalb des Kraftfahrzeugs mit der Heckklappe verbunden wird, wobei der zweite Endbereich durch Betätigen wenigstens einer zweiten lösbaren Verbindungseinrichtung von außerhalb des Kraftfahrzeugs mit der Heckklappe verbunden wird, und wobei ferner wenigstens ein Zwischenbereich des Heckspoilers zwischen den beiden Endbereichen des Heckspoilers durch Betätigen wenigstens einer lösbaren Verbindungsvorrichtung von innerhalb des Kraftfahrzeugs mit der Heckklappe verbunden wird. Mit dieser weiteren praktischen Ausführungsform des Verfahrens - bei welcher der Spoiler als Heckspoiler mit einem ersten und zweiten Endbereich bzw. einem ersten und zweiten Ende und das Karosserieteil als Heckklappe ausgebildet wird bzw. bei welcher als Spoiler ein Heckspoiler mit einem ersten und zweiten Endbereich bzw. einem ersten und zweiten Ende und als Karosserieteil eine Heckklappe verwendet wird - sind die bereits oben im Zusammenhang mit der Baugruppe dargelegten Vorteile verbunden.

### Kurzbeschreibunq der Zeichnung

Nachfolgend wird ein Ausführungsbeispiel der Erfindung anhand der beigefügten Zeichnung näher erläutert. Es zeigt:
- Fig. 1A und 1B: jeweils eine schematische Vorderansicht eines Teilbereichs einer erfindungsgemäßen Baugruppe, montiert an einem Kraftfahrzeug,

- Fig. 1C: eine vergrößerte Detaildarstellung der Fig. 1B,
- Fig. 1D und 1E: jeweils eine Schnittdarstellung eines Schnitts entlang der in Fig. 1C gezeigten Schnittlinie A-A bzw. B-B,
- Fig. 2: eine schematische Vorderansicht des Heckbereichs des Kraftfahrzeugs, mit dem der Heckspoiler gemäß den obigen Figuren verbindbar ist und.
- Fig. 3: eine sehr schematische Darstellung des Heckspoilers zur Veranschaulichung der Lage der Verbindungseinrichtungen des Ausführungsbeispiels relativ zu der Lage der Verbindungsvorrichtungen, die von innerhalb des Kraftfahrzeugs zugänglich sind.

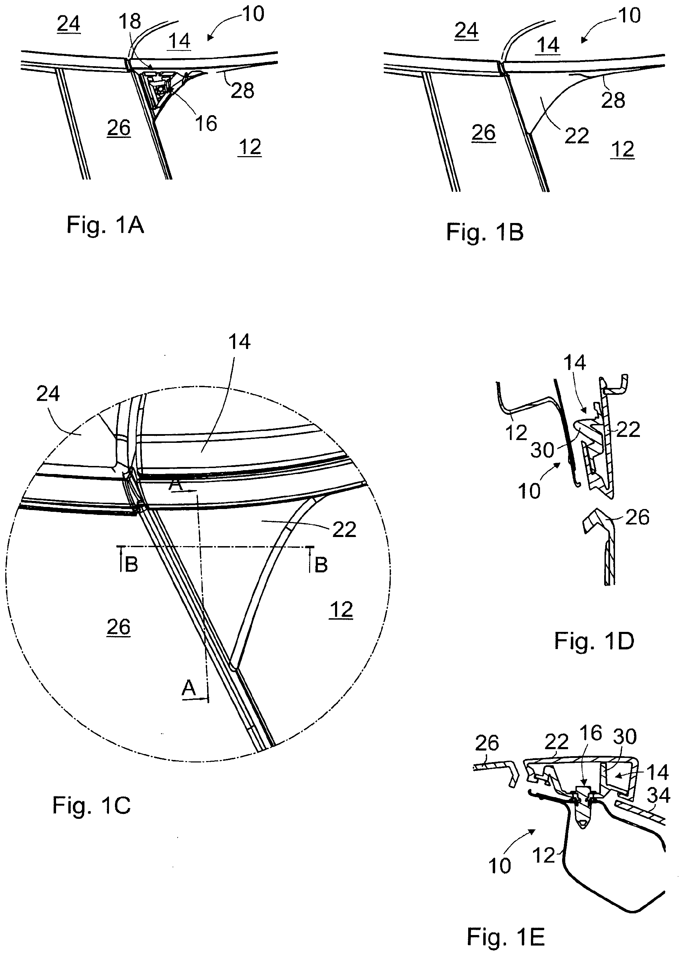

Die Baugruppe 10 für ein Kraftfahrzeug (vgl. Fig. 1A) umfasst ein Karosserieteil 12 in Form einer Heckklappe 12 und einen Spoiler 14 in Form eines Heckspoilers 14. Die Baugruppe 10 ist an ein Kraftfahrzeug montierbar, von dem in der Darstellung nach den Fig. 1A bis 1C - die nur einen linken Randbereich des Heckbereichs des Kraftfahrzeugs auf der Höhe des Heckspoilers 14 zeigen - noch das Dach 24 und eine Blende 26 einer D-Säule teilweise dargestellt sind.

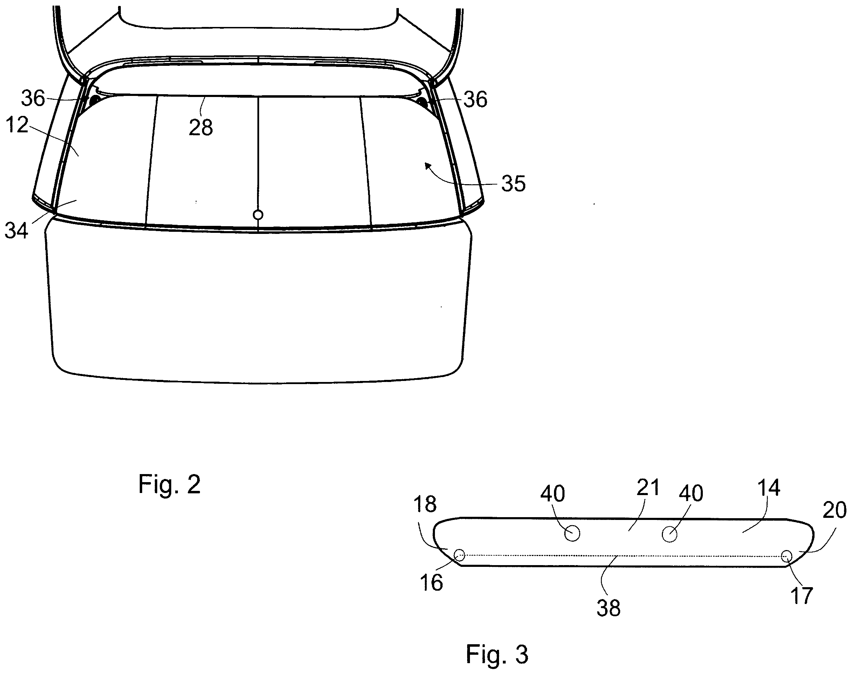

Der Heckspoiler 14 und die Heckklappe 12 sind durch eine erste und eine zweite lösbare Verbindungseinrichtungen 16, 17 in Form einer ersten und zweiten lösbaren Schraubverbindung 16, 17 miteinander verbunden, wobei in der Darstellung nach den Fig. 1A und 1E, die nur einen linken Randbereich des Heckbereichs des Kraftfahrzeugs auf der Höhe des Heckspoilers 14 zeigen, nur die erste Schraubverbindungen 16 detailliert veranschaulicht ist. Die Lage der anderen Schraubverbindung 17 an dem Heckspoiler 14 ist in Fig. 3 veranschaulicht. Die erste lösbare Schraubverbindung 16 befindet sich an einem ersten linken Endbereich 18 des Heckspoilers 14 (vgl. auch Fig. 1A, welche die Verbindungseinrichtung 16 am linken Endbereich 18 zeigt) und die zweite lösbare Schraubverbindung 17 befindet sich an einem zweiten rechten Endbereich 20 des Heckspoilers (nur in Fig. 3 veranschaulicht). Jede Schraubverbindung 16, 17 verbindet den jeweiligen Endbereich 18, 20 des Heckspoilers 14 mit der Heckklappe 12. Jede lösbare Schraubverbindung 16, 17 ist zum Betätigen derselben von außerhalb des Kraftfahrzeugs zugänglich bzw. ist von außerhalb des Kraftfahrzeugs betätigbar, also anziehbar bzw. lösbar. Der Heckspoiler 14 ist an dem oberen Rand 28 der Heckklappe 12 angebracht bzw. mit diesem verbunden.

Nach der Montage des Heckspoilers 14 an der Hecklappe 12, welche insbesondere das Verbinden des Heckspoilers 14 mit der Heckklappe 12 durch Festziehen bzw. Betätigen der lösbaren Schraubverbindungen 16, 17 umfasst, werden die Schraubverbindungen 16, 17 jeweils durch ein Verkleidungselement 22 (vgl. Fig. 1B), das in Form eines aerodynamischen Abweisers 22 ausgebildet ist, bedeckt.

Die Schnittdarstellungen gemäß den Fig. 1D und 1E veranschaulichen die nähere Ausbildung der Baugruppe 10 im Verbindungsbereich des ersten linken Endbereichs 18 des Heckspoilers 14. So veranschaulicht die Fig. 1E, welche den Schnitt entlang der in Fig. 1C gezeigten Schnittlinie B-B zeigt, detaillierter die Ausbildung der lösbaren Verbindungseinrichtung 16 in Form der lösbaren Schraubverbindung 16, die zum Betätigen derselben von außerhalb des Kraftfahrzeugs zugänglich ist bzw. die von außerhalb des Kraftfahrzeugs betätigbar ist. Der Heckspoiler 14 umfasst ein Trägerteil 30, an welchem der aerodynamische Abweiser 22 zur Herstellung einer Rastverbindung bzw. Schnappverbindung durch Druckausübung formschlüssig aufgenommen wurde. Die Schnittdarstellungen nach Fig. 1D und 1E veranschaulichen im Schnitt ferner noch die Heckklappe 12, die Blende 26 der D-Säule und die Heckscheibe 34 der Heckklappe 12 (nur bei Fig. 1E veranschaulicht).

Die Fig. 2 zeigt eine schematische Vorderansicht des Heckbereichs 35 des Kraftfahrzeugs, mit dem der Heckspoiler 14 gemäß den obigen Figuren verbindbar ist. Die Fig. 2 veranschaulicht also die Situation, in welcher der Heckspoiler 14 nicht an der Heckklappe 12 angebracht ist, so dass hier nur die Verbindungspartner 36 der Schraubverbindungen 16, 17 für die Endbereiche 18, 20 des Heckspoilers 14 an dem linken bzw. rechten Endbereich der Heckklappe 12 schematisch gezeigt sind.

Ein Zwischenbereich 21 (vgl. Fig. 3) des Heckspoilers 14 zwischen dem ersten Endbereich 18 und dem zweiten Endbereich 20 des Heckspoilers 14 ist ferner durch zwei von innerhalb des Kraftfahrzeugs zugängliche und lösbare Verbindungsvorrichtungen 40 mit der Heckklappe 12 verbunden.

Eine die erste Verbindungseinrichtung 16 mit der zweiten Verbindungseinrichtung 17 verbindende Verbindungsgerade 38 ist von den beiden Verbindungsvorrichtungen 40, die von innerhalb des Kraftfahrzeugs zugänglich ist, beabstandet.

Bei einem Verfahren zum Verbinden der Heckklappe 12 mit dem Heckspoiler 14 wird der Heckspoiler 14 mit der Heckklappe 12 unter anderem durch Betätigen der beiden lösbaren Schraubverbindungen 16, 17 verbunden, wobei die beiden Schraubverbindungen 16, 17 hierfür von außerhalb des Kraftfahrzeugs betätigt werden.

### Bezugszeichenliste

- 10: Baugruppe
- 12: Karosserieteil
- 14: Spoiler
- 16: Verbindungseinrichtung
- 17: Verbindungseinrichtung
- 18: Endbereich
- 20: Endbereich
- 21: Zwischenbereich
- 22: Verkleidungselement
- 24: Dach
- 26: Blende D-Säule
- 28: Rand
- 30: Trägerteil
- 34: Heckscheibe
- 35: Heckbereich
- 36: Verbindungspartner
- 38: Verbindungsgerade
- 40: Verbindungsvorrichtung

## Patentansprüche

1. Baugruppe (10) für ein Kraftfahrzeug, mit einer Heckklappe (12) und einem Heckspoiler (14), wobei der Heckspoiler (14) und die Heckklappe (12) durch lösbare Schraubverbindungen (16, 17) miteinander verbunden sind, **dadurch gekennzeichnet, dass** der Heckspoiler (14) ein Trägerteil (30) umfasst, an welchem aerodynamische Abweiser (22) durch eine Rastverbindung formschlüssig aufgenommen sind, wobei die aerodynamischen Abweiser (22) die Schraubverbindungen (16, 17) bedecken, so dass die lösbaren Schraubverbindungen (16, 17) zum Betätigen derselben von außerhalb des Kraftfahrzeugs zugänglich sind.

2. Baugruppe (10) nach Anspruch 1, **dadurch gekennzeichnet, dass** der Heckspoiler (14) einen ersten (18) und einen zweiten (20) Endbereich aufweist, wobei der erste Endbereich (18) durch die erste lösbare Schraubverbindung (16), die von außerhalb des Kraftfahrzeugs zugänglich ist, mit der Heckklappe (12) verbunden ist, wobei der zweite Endbereich (20) durch die zweite lösbare Schraubverbindung (17), die von außerhalb des Kraftfahrzeugs zugänglich ist, mit der Heckklappe (12) verbunden ist, und wobei wenigstens ein Zwischenbereich (21) des Heckspoilers (14) zwischen den beiden Endbereichen (18, 20) des Heckspoilers (14) durch wenigstens eine von innerhalb des Kraftfahrzeugs zugängliche lösbare Verbindungsvorrichtung (40) mit der Heckklappe (12) verbunden ist.

3. Baugruppe nach Anspruch 2, **dadurch gekennzeichnet, dass** eine die erste Schraubverbindung (16) mit der zweiten Schraubverbindung (17) verbindende Verbindungsgerade (38) von der Verbindungsvorrichtung (40), die von innerhalb des Kraftfahrzeugs zugänglich ist, beabstandet ist.

4. Verfahren zum Verbinden einer Heckklappe (12) mit einem Heckspoiler (14), wobei der Heckspoiler (14) mit der Heckklappe (12) durch Betätigen von lösbaren Schraubverbindung (16, 17) verbunden wird, **dadurch gekennzeichnet, dass** der Heckspoiler (14) ein Trägerteil (30) umfasst, an welchem aerodynamische Abweiser (22) zur Herstellung einer Rastverbindung durch Druckausübung formschlüssig aufgenommen werden, wobei die aerodynamischen Abweiser (22) die Schraubverbindungen (16, 17) bedecken, und dass die Schraubverbindungen (16, 17) von außerhalb des Kraftfahrzeugs betätigt werden.

5. Verfahren nach Anspruch 4, **dadurch gekennzeichnet, dass** der Heckspoiler (14) zusätzlich durch Betätigen wenigstens einer von innerhalb des Kraftfahrzeugs zugänglichen und lösbaren Verbindungsvorrichtung (40) von innerhalb des Kraftfahrzeugs mit der Heckklappe (12) verbunden wird.

6. Verfahren nach Anspruch 4 oder 5, **dadurch gekennzeichnet, dass** der Heckspoiler (14) einen ersten und einen zweiten Endbereich (18, 20) aufweist, wobei der erste Endbereich (18) durch Betätigen der ersten lösbaren Schraubverbindung (16) von außerhalb des Kraftfahrzeugs mit der Heckklappe (12) verbunden wird, wobei der zweite Endbereich (20) durch Betätigen der zweiten lösbaren Schraubverbindung (17) von außerhalb des Kraftfahrzeugs mit der Heckklappe (12) verbunden wird, und wobei ferner wenigstens ein Zwischenbereich (210) des Heckspoilers (14) zwischen den beiden Endbereichen (18, 20) des Heckspoilers (14) durch Betätigen wenigstens einer lösbaren Verbindungsvorrichtung (40) von innerhalb des Kraftfahrzeugs mit der Heckklappe (12) verbunden wird.

## Claims

1. An assembly (10) for a motor vehicle, with a tailgate (12) and a rear spoiler (14), wherein the rear spoiler (14) and the tailgate (12) are connected to one another by releasable screw connections (16, 17), **characterized in that** the rear spoiler (14) comprises a support part (30), on which aerodynamic deflectors (22) are received positively by way of a latching connection, wherein the aerodynamic deflectors (22) cover the screw connections (16, 17), so that the releasable screw connections (16, 17) are accessible from outside the motor vehicle for actuating them.

2. The assembly (10) according to claim 1, **characterized in that** the rear spoiler (14) has a first (18) and a second (20) end region, wherein the first end region (18) is connected to the tailgate (12) by the first releasable screw connection (16), which is accessible from outside the motor vehicle, wherein the second end region (20) is connected to the tailgate (12) by the second releasable screw connection (17), which is accessible from outside the motor vehicle, and wherein at least one intermediate region (21) of the rear spoiler (14) between the two end regions (18, 20) of the rear spoiler (14) is connected to the tailgate (12) by at least one releasable connecting device (40) which is accessible from inside the motor vehicle.

3. The assembly according to claim 2, **characterized in that** a straight connecting line (38) connecting the first screw connection (16) to the second screw connection (17) is at a distance from the connecting device (40), which is accessible from inside the motor vehicle.

4. A method for connecting a tailgate (12) to a rear spoiler (14), wherein the rear spoiler (14) is connected to the tailgate (12) by actuating releasable screw connections (16, 17), **characterized in that** the rear spoiler (14) comprises a support part (30), on which aerodynamic deflectors (22) are received positively by the exertion of pressure to produce a latching connection, said aerodynamic deflectors (22) covering the screw connections (16, 17), and **in that** the screw connections (16, 17) are actuated from outside the motor vehicle.

5. The method according to claim 4, **characterized in that** the rear spoiler (14) is additionally connected to the tailgate (12) from inside the motor vehicle by actuating at least one connecting device (40) which is accessible and releasable from inside the motor vehicle.

6. The method according to claim 4 or 5, **characterized in that** the rear spoiler (14) has a first and a second end region (18, 20), wherein the first end region (18) is connected to the tailgate (12) by actuating the first releasable screw connection (16) from outside the motor vehicle, wherein the second end region (20) is connected to the tailgate (12) by actuating the second releasable screw connection (17) from outside the motor vehicle and wherein furthermore at least one intermediate region (210) of the rear spoiler (14) between the two end regions (18, 20) of the rear spoiler (14) is connected to the tailgate (12) by actuating at least one releasable connecting device (40) from inside the motor vehicle.

## Revendications

1. Groupe modulaire (10) pour un véhicule automobile, comprenant un hayon (12) et un becquet arrière (14), le becquet arrière (14) et le hayon (12) étant reliés entre eux par des raccords vissés (16, 17) amovibles, **caractérisé en ce que** le becquet arrière (14) comprend une pièce de support (30) sur laquelle des déflecteurs (22) aérodynamiques sont logés par adhérence de forme au moyen d'une liaison par encliquetage, les déflecteurs (22) aérodynamiques recouvrant les raccords vissés (16, 17) de sorte que les raccords vissés (16, 17) amovibles sont accessibles depuis l'extérieur du véhicule automobile pour l'actionnement de ceux-ci.

2. Groupe modulaire (10) selon la revendication 1, **caractérisé en ce que** le becquet arrière (14) présente une première (18) et une deuxième (20) partie terminale, la première partie terminale (18) étant reliée au hayon (12) au moyen du premier raccord vissé (16) amovible, lequel est accessible depuis l'extérieur du véhicule automobile, la deuxième partie terminale (20) étant reliée au hayon (12) au moyen du deuxième raccord vissé (17) amovible, lequel est accessible depuis l'extérieur du véhicule automobile, et au moins une partie intermédiaire (21) du becquet arrière (14) étant reliée au hayon (12) au moyen d'au moins un dispositif de liaison (40) amovible, accessible depuis l'intérieur du véhicule automobile.

3. Groupe modulaire (10) selon la revendication 2, **caractérisé en ce qu'**une droite de liaison (38) reliant le premier raccord vissé (16), avec le deuxième raccord vissé (17), est distancé du dispositif de liaison (40) qui est accessible depuis l'intérieur du véhicule.

4. Procédé de raccordement d'un hayon (12) à un becquet arrière (14), le becquet arrière (14) étant relié au hayon (12) en actionnant des raccords vissés (16, 17) amovibles, **caractérisé en ce que** le becquet arrière (14) comprend une pièce de support (30) sur laquelle des déflecteurs (22) aérodynamiques sont logés par adhérence de forme pour établir une liaison par encliquetage en exerçant une pression, les déflecteurs (22) aérodynamiques recouvrant les raccords vissés (16, 17), et **en ce que** les raccords vissés (16, 17) étant actionnés depuis l'extérieur du véhicule automobile.

5. Procédé selon la revendication 4, **caractérisé en ce que** le becquet arrière (14) est relié en plus au hayon (12) depuis l'intérieur du véhicule automobile en actionnant au moins un dispositif de liaison (40) amovible et accessible depuis l'intérieur du véhicule automobile.

6. Procédé selon la revendication 4 ou 5, **caractérisé en ce que** le becquet arrière (14) présente une première partie terminale (18) et une deuxième partie terminale (20), la première partie terminale (18) étant reliée au hayon (12) en actionnant le premier raccord vissé (16) amovible, accessible depuis l'extérieur du véhicule automobile, la deuxième partie terminale (20) étant reliée au hayon (12) en actionnant le deuxième raccord vissé (17) amovible, accessible depuis l'extérieur du véhicule automobile, et, en outre, au moins une partie intermédiaire (21) du becquet arrière (14), située entre les deux parties terminales (18, 20) du becquet arrière (14), étant reliée au hayon (12) au moyen d'au moins un dispositif de liaison (40) amovible, accessible depuis l'intérieur du véhicule automobile.
